# NEUE EUROPÄISCHE PATENTSCHRIFT

(11) **EP 0 779 909 B2**
(45) Veröffentlichungstag und Bekanntmachung des Hinweises auf die Entscheidung über den Einspruch: **06.02.2002**
(45) Hinweis auf die Patenterteilung: 03.06.1998
(21) Anmeldenummer: 95932667.9
(22) Anmeldetag: 05.09.1995
(51) Int. Cl.: C08J 9/232, C08J 5/12, B32B 9/02

(54) **FORMTEIL AUS STÄRKESCHAUMSTOFF**
MOULDED PART MADE OF STARCH FOAMED MATERIAL
PIECE MOULEE EN MOUSSE D'AMIDON

(30) Priorität: 06.09.1994 DE 4431777
(43) Veröffentlichungstag der Anmeldung: 25.06.1997
(73) Patentinhaber: bio-tec Biologische Naturverpackungen GmbH & Co. KG, 46446 Emmerich (DE)
(72) Erfinder: LÖRCKS, Jürgen, D-46459 Rees (DE); POMMERANZ, Winfried, D-32130 Enger (DE); SCHMIDT, Harald, D-46446 Emmerich (DE)
(74) Vertreter: VOSSIUS & PARTNER
(86) Internationale Anmeldenummer: EP9503486
(87) Internationale Veröffentlichungsnummer: WO9607693

(56) Entgegenhaltungen:
- DE-A- 4 228 779
- DE-A- 4 236 717
- US-A- 5 186 990
- Kirk-Othmer, Encyclopedia of Chemical Technology, 1983, vol. 12, pp. 839/840

## Beschreibung

Die Erfindung betrifft ein Formteil aus Stärkeschaumstoff zur Verwendung als Transportschutz und ein Verfahren zu dessen Herstellung.

Als Transportschutz und für die Verpackung besonders empfindlicher Transportgüter, wie Glaswaren oder Elektronikerzeugnisse, sind beispielsweise Formschäume aus Kunststoff (z.B. EPS) und/oder Formteile aus Karton, Wellpappe und Faserguß bekannt. Viele dieser Verpackungsmaterialien sind nur mit hohem Aufwand recyclebar, da sie nicht vollständig aus biologisch abbaubaren Materialien bestehen. Ferner umhüllen viele Verpackungen das jeweilige Transportgut vollständig. So können aus verpackungstechnischen Gründen oftmals besonders empfindliche Teile an Transportgütern nur ungenügend geschützt werden bzw. weniger empfindliche Teile werden mit dem gleichen Aufwand verpackt, wie der empfindlichste Teil des jeweiligen Transportgutes. Der Verpackungsaufwand ist hierbei außerordentlich hoch.

Aus "Kunststoffe" 84 (1994), Heft 8, Seiten 972 bis 976 sind Verarbeitungsmöglichkeiten für Stärke, beispielsweise für die Anwendung im Verpackungssektor bekannt. Ferner werden Faktoren, die die Eigenschaften von thermoplastischer Stärke beeinflussen, untersucht.

Die US-A-5 188 990 zeigt ein Verfahren zur Herstellung eines biologisch abbaubaren Verpackungsmaterials, beispielsweise eines Eckenschutzes, sowie weiterer Formkörper.

Die DE-A-24 32 700 zeigt ein Verfahren zur Herstellung einer im wesentlichen flachen, starren Struktur aus Polyurethan-Schaumteilen, die mit Kunststoff, der verflüssigt in von Abschrägungen gebildete Auslassungen gegossen wird, miteinander verbunden werden.

Die DE-C-42 36 717 beschreibt Formkörper aus Granulatperlen, die haupträchlich aus Stärke bestehen und miteinander zu dem Formkörper verklebt sind.

Aufgabe der Erfindung ist es, biologisch abbaubare Formteile aus Schaumprofilen zu schaffen, die eine wesentlich verbesserte Stabilität gegenüber mechanischen Einflüssen aufweisen, als Transportschutz verwendbar sind und wobei sich der Verpackungsaufwand minimiert.

Diese Aufgabe wird mit den Merkmalen der Patentansprüche gelöst.

Bei der Lösung geht die Erfindung von dem Grundgedanken aus, in einem Extrusionsprozeß Stärkeschaum als Profil in Form von massiven oder hohlen stabförmigen Profilen mit abgerundeten oder eckigen Querschnitten zu erzeugen. Diese elastischen Stärkeschaumprofile, die je nach Anforderung einen Querschnitt von 10 bis 50 mm und ein Raumgewicht von 10 bis 100 kg/m³ haben können, werden in verschiedenen Längen hergestellt und das zu schützende Transportgut mit diesen elastischen Stärkeschaumprofilen besonders an empfindlichen und exponierten Stellen umwickelt. Die Fixierung der Stärkeschaumprofile an dem Transportgut wird dadurch erleichtert, daß der Stärkeschaum durch leichtes Anfeuchten klebaktiv wird und so sowohl mit dem Transportgut als auch untereinander fixiert werden kann. Dies gewährleistet eine sehr gute Stoßabsorptionswirkung für besonders empfindliche Teile des Transportgutes und einen sinnvollen Einsatz der Stärkeschaumprofile als Transportschutz.

Weiterhin können die Stärkeschaumprofile durch Anfeuchten miteinander zu Platten verbunden werden. Diese Platten können insbesondere durch Änderung der Laufrichtung der Stärkeschaumprofile zu stabilen Duplex-, Triplex- oder Multiplex-Schaumplatten verarbeitet werden. Solche dickwandigen Multiplex-Stärkeschaumplatten können vielfältige Funktionen als Transportschutz, Verpackungsschutz, Dämmstoff gegen Einwirkung von Kälte, Wärme, Schall und Stoßabsorption erfüllen.

Darüber hinaus können die Multiplex-Stärkeschaumplatten etwa durch Sägen, Fräsen, Schneiden, Stanzen, Bohren, Schleifen oder Besäumen mechanisch oder thermisch bearbeitet und auf diesem Wege Formteile zur Verwendung als Transportschutz hergestellt werden.

Im folgenden wird die Erfindung anhand der Zeichnungen näher erläutert. Es zeigen:
Figur 1: das Verfahrensprinzip zur Herstellung erfindungsgemäßer Formteile und
Figur 2: eine Ansicht der Figur 1 von oben.

Nach der Erfindung wird in einem Extrusionsverfahren Stärkeschaum hergestellt und als stabförmiges Starkeschaumprofil 1 extrudiert. Diese Stärkeschaumprofile 1 bilden nach der ersten Ausführungsform der Erfindung Formteile, die unmittelbar als Transportschutz Verwendung finden. Dazu werden die Stärkeschaumprofile 1 mit Wasser angefeuchtet und direkt an ein zu schützendes Teil des Transportgutes angelegt. Das Anfeuchten aktiviert die Klebekraft der Stärkeschaumprofile 1, wodurch sie sowohl am Transportgut als auch aneinander haften. Ein derartiger Einsatz bietet sich besonders bei Transportgütern mit nur einzelnen empfindlichen Teilen an. Die Stärkeschaumprofile 1 sind stabförmig ausgebildet und weisen einen Durchmesser von 10 bis 50 mm sowie ein Raumgewicht von 10 bis 100 kg/m³ auf. Die Stärkeschaumprofile 1 können ebenso massiv oder hohl ausgebildet sein und abgerundete oder eckige Querschnitte aufweisen.

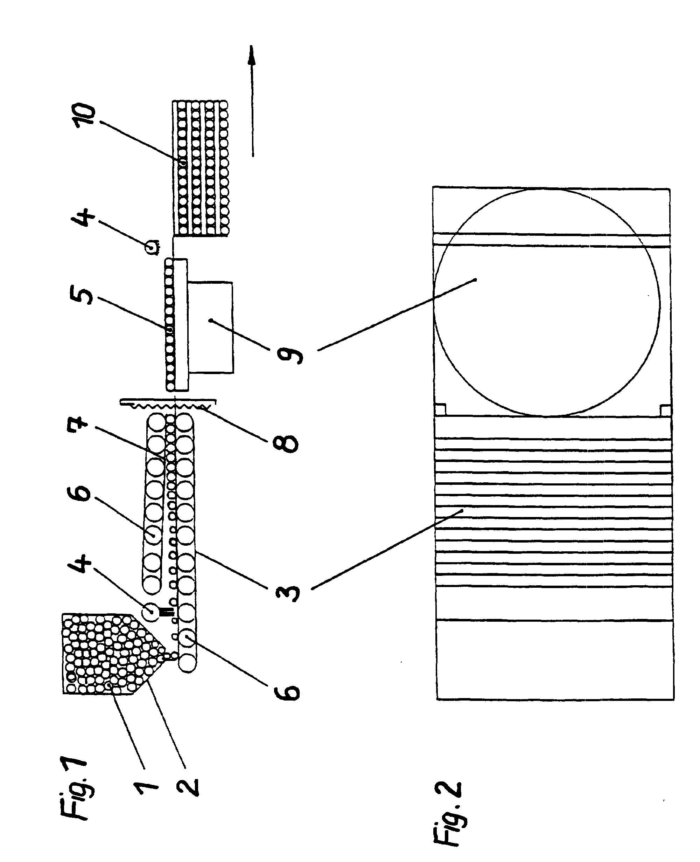

Die Figuren 1 und 2 zeigen eine weitere Ausführungsform der Erfindung. Hierbei werden in einer Anlage aus elastischen Stärkeschaumprofilen 1 Platten 5 hergestellt und zu Multiplex-Schaumplatten 10 verarbeitet, aus denen im weiteren durch geeignete mechanische Bearbeitung Formteile für vielfältige Verwendungszwecke hergestellt werden können. In einem Extrusionsverfahren werden zunächst elastische und gemäß vorliegender Ausführung stabförmige Stärkeschaumprofile 1 hergestellt und in einem Magazin 2 bevorratet. Aus dem Magazin 2 werden die Stärkeschaumprofile 1 in gleichmäßiger Menge abgegeben und auf ein Förderband 3 geleitet. Zunächst transportiert das Förderband 3 die Stärkeschaumprofile 1 zu einer Sprüheinrichtung 4, die sie von außen, vorzugsweise mit Wasser, anfeuchtet. Im weiteren Verfahrensablauf erfolgt das Verkleben der Stärkeschaumprofile 1 mit Hilfe eines weiteren über Rollen 6 geführten Transportbandes 7, das horizontal über dem Förderband 3 verlaufend angeordnet ist. Beide Bänder 3 und 7 nähern sich einander allmählich bis zu einem bestimmten Abstand und bilden einen keilförmigen Zwischenraum, der sich in Transportrichtung der Stärkeschaumprofile 1 verengt. Zwischen den Bändern 3 und 7, die sich mit gleicher Geschwindigkeit in Richtung zur Verengung bewegen, werden die angefeuchteten Stärkeschaumprofile 1 dicht aneinander gefügt, so daß sie miteinander fest verkleben und treten als Platte 5 zwischen den Enden der Bänder 3 und 7 hervor. Unmittelbar danach werden die Platten 5 durch eine Trennvorrichtung B auf die gewünschte Länge geschnitten. Die fertiggestellten Platten 5 gelangen auf einen Drehtisch 9, der jeweils aufeinanderfolgende Platten 5 um beispielsweise 90° dreht, um die Laufrichtung der Stärkeschaumprofile 1 zu ändern. Es ist auch möglich, die Düsen der Extruderanlage umzustellen oder auszutauschen, so daß die extrudierten Stärkeschaumprofile 1 in geänderter Lage oder Form zu Platten 5 verklebt werden. Damit läßt sich gleichzeitig die Laufrichtung der Stärkeschaumprofile 1 jeder folgenden Platte 5 ändern, wodurch das Drehen der Platten 5 entfällt. Die Platten 5 werden nach dem Schneiden und gegebenenfalls Drehen mit geeigneten Transportmitteln vom Drehtisch 9 geschoben, gleichzeitig wiederum angefeuchtet, übereinander geschichtet, so daß sie miteinander verkleben und anschließend gegebenenfalls auf Form geschnitten. Das Verkleben der Platten 5 untereinander kann in geeigneter Weise durch kurzzeitiges Aufbringen einer Druckkraft beschleunigt werden. So hergestellte Multiplexplatten 10 können beliebig viele Schichten von Platten 5 aufweisen, wobei deren Elastizität variierbar ist. Die unterschiedliche Laufrichtung der Stärkeschaumprofile 1 von übereinanderliegenden Platten 5 gewährleistet die Stabilität der Multiplexplatten 10. Zweckmäßigerweise richten sich die Eigenschaften der Multiplexplatten 10 nach dem späteren Verwendungszweck, z.B. als Transportschutz, Verpackungsschutz, Dämmstoff gegen Kälte und Wärme sowie zur Schall- und Stoßabsorption, als Füllung für Sandwichelemente und -verbunde, als elektrostatisch nicht aufladbarer Verpackungsschutz für Elektronik- und Elektroerzeugnisse, oder als konstruktive Erzeugnisse für die Bau-, Elektro-, Möbel-, Automobil- und Verpackungsindustrie. Beispielsweise bei einer Verwendung als Verpackungsschutz für besonders empfindliche Transportgüter, wie Glaserzeugnisse, kann in die Multiplexplatte 10 eine Aussparung eingefräst oder gestanzt werden, die der Form des Transportgutes entspricht und dieses umhüllt.

Nach einer weiteren Ausführungsform der Erfindung ist es möglich, einzelne aus Stärkeschaumprofilen 1 hergestellte Platten 5 anzufeuchten und an das Transportgut anzulegen bzw. besonders zu schützende Teile damit zu umwickeln. Die Klebeeigenschaft der Stärke gewährleistet auch hierbei eine sichere Haftung. In diesem Fall entfallen die Verfahrensschritte nach dem Schneiden an der Trennvorrichtung 8.

## Patentansprüche

1. Formteil aus biologisch vollständig abbaubarem Stärkeschaumstoff zur Verwendung als Transportschutz, wobei der Stärkeschaumstoff zu stabförmigen Stärkeschaumprofilen (1) aufgebläht ist, die bei Aufbringen von Feuchtigkeit selbstklebend sind und die Stärkeschaumprofile (1) miteinander zu Platten (5) verbunden sind.

2. Formteil nach Anspruch 1, **dadurch gekennzeichnet, daß** die Stärkeschaumprofile (1) massiv oder hohl ausgebildet sind und abgerundete oder eckige Querschnitte aufweisen.

3. Formteil nach Anspruch 1 oder 2, **dadurch gekennzeichnet, daß** die Stärkeschaumprofile (1) einen Durchmesser von 10 bis 50 mm und ein Raumgewicht von 10 bis 100 kg/m³ aufweisen.

4. Formteil nach einem der Ansprüche 1 bis 3, **dadurch gekennzeichnet, daß** die Stärkeschaumprofile (1) elastisch verformbar sind.

5. Formteil nach einem der Ansprüche 1 bis 4, **dadurch gekennzeichnet, daß** die Stärkeschaumprofile (1) aneinander haften.

6. Formteil nach einem der Ansprüche 1 bis 5, **dadurch gekennzeichnet, daß** die Stärkeschaumprofile (1) bzw. Platten (5) am jeweiligen Transportgut haften.

7. Formteil nach Anspruch 1, **dadurch gekennzeichnet, daß** die Stärkeschaumprofile (1) einer Platte (5) eine bestimmte Laufrichtung aufweisen.

8. Formteil nach einem der Ansprüche 1 bis 7, **dadurch gekennzeichnet, daß** mehrere Platten (5) übereinandergeschichtet zu Multiplexplatten (10) verbunden sind.

9. Formteil nach Anspruch 8 **dadurch gekennzeichnet, daß** in Multiplexplatten (10) übereinanderliegende Platten (5) verschiedene Laufrichtungen der Stärkeschaumprofile (1) aufweisen.

10. Verfahren zum Herstellen von Formteilen nach einem der Ansprüche 1 bis 8 durch Extrudieren von Stärkeschaum und Ausformen von stabförmigen Stärkeschaumprofilen (1), wobei die Stärkeschaumprofile (1) zu Platten (5) verklebt werden.

11. Verfahren nach Anspruch 10, wobei die Platten (5) zu Multiplexplatten (10) verklebt werden.

12. Verfahren nach Anspruch 11, wobei die Multiplexplatten (10) zur Ausbildung von Formteilen vorzugsweise mechanisch oder thermisch bearbeitet werden.

13. Verfahren nach einem der Ansprüche 10 bis 12, **dadurch gekennzeichnet, daß** die Stärkeschaumprofile (1) mit einer bestimmten Laufrichtung zu Platten (5) verklebt werden.

14. Verfahren nach einem der Ansprüche 10 bis 13, **dadurch gekennzeichnet, daß** die Klebkraft der Stärkeschaumprofile (1) bzw. Platten (5) durch Anfeuchten aktiviert wird.

15. Verfahren nach einem der Ansprüche 10 bis 14, **dadurch gekennzeichnet, daß** die Platten (5) bzw. Multiplexplatten (10) auf bestimmte Größen geschnitten werden.

16. Verfahren nach einem der Ansprüche 10 bis 15, **dadurch gekennzeichnet, daß** bei der Herstellung von Multiplexplatten (10) die Platten (5) mit unterschiedlicher Laufrichtung der Stärkeschaumprofile (1) verklebt werden.

17. Verfahren nach einem der Ansprüche 10 bis 16, **dadurch gekennzeichnet, daß** bei der Herstellung von Multiplexplatten (10) die Platten (5) zunächst gedreht und anschließend übereinandergeschichtet verklebt werden.

18. Verfahren nach einem der Ansprüche 10 bis 17, **dadurch gekennzeichnet, daß** die Multiplexplatten (10) durch Sägen, Fräsen, Schneiden, Stanzen, Schleifen, Besäumen oder Bohren mechanisch bearbeitet werden.

19. Verwendung eines Formteils nach einem der Ansprüche 1 bis 9, bzw. hergestellt nach einem der Ansprüche 10 bis 18, als Verpackungsmittel, Transportschutz, Baustoff und Dämmstoff zur Kälte-, Wärme-, Schall und Stoßabsorption, Füllung für Sandwichelemente und verbunde, elektrostatisch nicht aufladbarer Verpackungsschutz für Elektronik- und Elektroerzeugnisse und konstruktive Erzeugnisse für die Bau-, Elektro-, Möbel-, Automobil- und Verpackungsindustrie.

## Claims

1. A molded part made of completely biodegradable starch foamed material to be used for protecting transported articles, wherein the starch foamed material is expanded to form rod-shaped starch foam profiled sections (1) which are self-adhesive when moisture is applied and the starch foam profiled sections (1) are bonded to form panels (5).

2. The molded part according to claim 1, **characterized in that** the starch foam profiled sections (1) are solid or hollow and have rounded or angular cross-sections.

3. The molded part according to claim 1 or 2, **characterized in that** the starch foam profiled sections (1) have a diameter of 10 to 50 mm and a specific weight of 10 to 100 kg/m³.

4. The molded part according to any one of claims 1 to 3, **characterized in that** the starch foam profiled sections (1) can undergo an elastic deformation.

5. The molded part according to any one of claims 1 to 4, **characterized in that** the starch foam profiled sections (1) adhere to each other.

6. The molded part according to any one of claims 1 to 5, **characterized in that** the starch foam profiled sections (1) or the panels (5), respectively, adhere to the respective transported article.

7. The molded part according to claim 1, **characterized in that** the starch foam profiled sections (1) of a panel (5) have a predetermined longitudinal direction.

8. The molded part according to any one of claims 1 to 7, **characterized in that** a plurality of panels (5) are stacked and bonded to form multiplex panels (10).

9. The molded part according to claim 8, **characterized in that** in multiplex panels (10) the starch foam profiled sections (1) of panels (5) lying on top of another have different longitudinal directions.

10. A method for preparing molded parts according to any one of claims 1 to 8 by extruding starch foam and molding rod-shaped starch foam profiled sections (1), wherein the starch foam profiled sections (1) are bonded to form panels (5).

11. The method according to claim 10, wherein the panels (5) are bonded to form multiplex panels (10).

12. The method according to claim 11, wherein the multiplex panels (10) are preferably mechanically or thermally processed to form molded parts.

13. The method according to any one of claims 10 to 12, **characterized in that** the starch foam profiled sections (1) having a predetermined longitudinal direction are bonded to form panels (5).

14. The method according to any one of claims 10 to 13, **characterized in that** the adhesiveness of the starch foam profiled sections (1) or plates (5) is activated when moisture is applied.

15. The method according to any one of claims 10 to 14, **characterized in that** the panels (5) or multiplex panels (10) are cut to predetermined sizes.

16. The method according to any one of claims 10 to 15, **characterized in that**, when preparing the multiplex panels (10), the panels (5) with starch foam profiled sections (1) having different longitudinal directions are bonded.

17. The method according to any one of claims 10 to 16, **characterized in that**, when preparing the multiplex panels (10), the panels (5) are first rotated and then bonded in a sandwiched state.

18. The method according to any one of claims 10 to 17, **characterized in that** the multiplex panels (10) are mechanically processed by sawing, milling, cutting, stamping, grinding, trimming or drilling.

19. Use of the molded part according to any one of claim 1 to 9 or prepared according any one of claims 10 to 18, respectively, as a packaging material, a protector for transported articles, a constructing material and insulating material for low temperature, heat, sound and shock absorption, a filler for sandwich elements and laminates, an electrostatically non-chargeable protector for the packaging of electronical and electric articles and structural products for the construction, electrical, furniture, automobile and packaging industry.

## Revendications

1. Pièce moulée en mousse d'amidon totalement dégradable par processus biologique, conçue pour être utilisée en tant que protection de transport, la mousse d'amidon étant gonflée pour former des profilés (1) en mousse d'amidon en forme de barres qui sont auto-adhérents lors d'un apport d'humidité, et lesdits profilés (1) en mousse d'amidon étant reliés les uns aux autres pour obtenir des panneaux (5).

2. Pièce moulée selon la revendication 1, **caractérisée par le fait que** les profilés (1) en mousse d'amidon sont de réalisation massive ou creuse, et présentent des sections transversales arrondies ou anguleuses.

3. pièce moulée selon la revendication 1 ou 2, **caractérisée par le fait que** les profilés (1) en mousse d'amidon ont un diamètre compris entre 10 et 50 mm, et un poids spécifique compris entre 10 et 100 kg/m³.

4. Pièce moulée selon l'une des revendications 1 à 3, **caractérisée par le fait que** les profilés (1) en mousse d'amidon sont élastiquement déformables.

5. Pièce moulée selon l'une des revendications 1 à 4, **caractérisée par le fait que** les profilés (1) en mousse d'amidon adhèrent les uns aux autres.

6. Pièce moulée selon l'une des revendications 1 à 5, **caractérisée par le fait que** les profilés (1) en mousse d'amidon ou les panneaux (5) adhèrent, respectivement, au produit transporté considéré.

7. Pièce moulée selon la revendication 1, **caractérisée par le fait que** les profilés (1) en mousse d'amidon d'un panneau (5) présentent une direction de défilement déterminée.

8. Pièce moulée selon l'une des revendications 1 à 7, **caractérisée par le fait que** plusieurs panneaux (5) sont reliés par couches superposées, pour former des panneaux multiplex (10).

9. Pièce moulée selon la revendication 8, **caractérisée par le fait que** des panneaux (5), superposés dans des panneaux multiplex (10), présentent différentes directions de défilement des profilés (1) en mousse d'amidon.

10. Procédé de fabrication de pièces moulées selon l'une des revendications 1 à 8, par extrusion de mousse d'amidon et par formage de profilés (1) en forme de barres en mousse d'amidon, lesdits profilés (1) en mousse d'amidon étant solidarisés par collage pour obtenir des panneaux (5).

11. Procédé selon la revendication 10, dans lequel les panneaux (5) sont solidarisés par collage pour former des panneaux multiplex (10).

12. Procédé selon la revendication 11, dans lequel les panneaux multiplex (10) sont de préférence soumis à un traitement mécanique ou thermique, pour former des pièces moulées.

13. Procédé selon l'une des revendications 10 à 12, **caractérisé par le fait que** les profilés (1) en mousse d'amidon sont solidarisés par collage, en des panneaux (5), avec une direction de défilement déterminée.

14. Procédé selon l'une des revendications 10 à 13, **caractérisé par le fait que** la force d'adhérence des profilés (1) en mousse d'amidon, ou des panneaux (5), est respectivement activée par humidification.

15. Procédé selon l'une des revendications 10 à 14, **caractérisé par le fait que** les panneaux (5), ou les panneaux multiplex (10), sont respectivement découpés à des tailles déterminées.

16. Procédé selon l'une des revendications 10 à 15, **caractérisé par le fait que**, lors de la fabrication de panneaux multiplex (10), les panneaux (5) sont solidarisés par collage avec une direction de défilement différente des profilés (1) en mousse d'amidon.

17. Procédé selon l'une des revendications 10 à 16, **caractérisé par le fait que**, lors de la fabrication de panneaux multiplex (10), les panneaux (5) sont tout d'abord animés d'une rotation, puis solidarisés par collage en des couches superposées.

18. Procédé selon l'une des revendications 10 à 17, **caractérisé par le fait que** les panneaux multiplex (10) sont usinés mécaniquement par sciage, fraisage, découpage, poinçonnage, ponçage, rognage ou perçage.

19. Utilisation d'une pièce moulée selon l'une des revendications 1 à 9, respectivement fabriquée selon l'une des revendications 10 à 18, en tant que moyen d'emballage ; protection de transport ; matériau de construction et matériau isolant pour l'absorption du froid, de la chaleur, des bruits et des chocs ; substance de charge pour des éléments stratifiés et des composites ; protection d'emballage exempte de charge électrostatique, pour des articles électroniques et électriques ; et produits structurels pour l'industrie du bâtiment, l'industrie électrique, l'industrie du meuble, l'industrie automobile et l'industrie du conditionnement.
